# EUROPEAN PATENT SPECIFICATION

(11) **EP 0 688 302 B1**
(45) Date of publication and mention of the grant of the patent: **16.07.1997**
(21) Application number: 94910061.4
(22) Date of filing: 09.03.1994
(51) Int. Cl.: C02F 1/72

(54) **METHOD FOR DISINFECTING WATER SUCH AS DRAIN WATER IN HORTICULTURE, AND APPLIANCE TO BE USED THEREWITH**
VERFAHREN ZUR ENTKEIMUNG VON WASSER, WIE Z.B. VON GIESSWASSER IM GARTENBAU, SOWIE GERAET ZUR DURCHFUEHRUNG DIESES VERFAHREN
PROCEDE DE DESINFECTION D'EAUX TELLES QUE LES EAUX USEES D'ORIGINE HORTICOLE, ET APPAREIL ASSOCIE

(30) Priority: 12.03.1993 NL 9300445
(43) Date of publication of application: 27.12.1995
(73) Proprietor: Kemira Chemicals B.V., 3180 AA Rozenburg (NL)
(72) Inventor: MATTILA, Tapio, NL-2597 CS The Hague (NL); EVERSDIJK, Arnhout, Leonard, NL-4813 KH Breda (NL)
(74) Representative: de Bruijn, Leendert C.
(86) International application number: NL9400058
(87) International publication number: WO9420424

(56) References cited:
- EP-A- 0 231 632
- DD-A- 239 109
- DE-A- 3 504 394
- PATENT ABSTRACTS OF JAPAN vol. 12, no. 338 (C-527)(3185) 12 September 1988 & JP,A,63 097 288 (NIPPON PEROXIDE) 27 April 1988
- Kirk-Othmer Encyclopedia of Chemical Technology, 3rd Edition, (1982) Vol. 17, page 60

## Description

The invention relates to a method for disinfecting water or aqueous solutions, for example water and drain water in horticulture, i.e. to a method for preventing and combating harmful microorganisms such as fungi, viruses, bacteria, yeasts and algae, for example in horticulture, in particular in the field of hydroponics, e.g. in chicory or Belgian or French endive cultures.

Such a method of the last-mentioned type is disclosed by the East German Patent No. 239109. This involves treating feed solutions and/or water with a hydrogen peroxide solution, the ultimate concentration thereof being tailored to each particular purpose. The water intended for feed solutions is preferably mixed with at least 150 ml of 3% strength hydrogen peroxide solution per m³ a day.

In German patent application No. 3,504,394 a method for purifying water supply systems is disclosed involving the use of a cleaning solution comprising 0.05 to 15 % by weight of an organic C₁-C₁₀ peracid, including performic acid. In addition to the peracid, the cleaning solution also comprises a mineral acid and optionally formic acid and/or citric acid.

Feed solutions containing pathogenic germs may form a major problem in horticulture, in particular in hydroponics. For example, in the water employed in horticulture (for example rainwater, ground water and ditch water) germs of plant diseases are present, such as fungi, bacteria, viruses and algae. Such microorganisms may also be present in so-called drain water or recirculation water, i.e. aqueous liquids which are recovered after they have passed through the culture substrate.

In addition to the abovementioned disinfection method with the aid of hydrogen peroxide, disinfection methods such as heating, ozone treatment and UV radiation are generally known.

The known methods have drawbacks, however. For example, the methods mentioned are often expensive and have an adverse effect on the treated liquid. The known method in which hydrogen peroxide is used has the further drawback that considerable amounts have to be employed, which has an adverse effect on the chemical composition of the treated water and to the plants. The present invention overcomes the abovementioned drawbacks.

The invention relates to a method for preventing and combating harmful microorganisms such as fungi, viruses, bacteria, yeasts and algae in water circulation systems, wherein the water, including feed solutions and drain water, has a disinfectant added to it which at least comprises a combination of performic acid and hydrogen peroxide and possibly formic acid and wherein performic acid is prepared in situ from formic acid and hydrogen peroxide.

The term "water circulation systems" refers to all water-carrying systems of which the aqueous liquid is to be subjected to a disinfection treatment. This may involve cooling water in various industrial applications, (waste) water of fish and meat processing plants, water in closed circulation systems ("recycle water"), but also municipal and industrial (waste) water which is desired to be disinfected before (re-)use or "dumping" in vulnerable or sensitive environmental waters such as lakes and rivers. A particular field of application is in horticulture. In general it is therefore a question of the disinfection of water-containing influents and effluents.

The performic acid is used together with another disinfectant, namely hydrogen peroxide, formic acid possibly also being present.

It was found that, for example, fungal spores in drain water are killed at as low a concentration of performic acid as 10 ppm in the treated water. The total treatment time in this case is only a few minutes, for example 5 minutes.

In order to destroy the pathogenic germs, in particular fungi, in the water to a significant extent, a concentration of 5-100 ppm of performic acid is desirable. The maximum performic acid concentration is preferably at most 200 ppm. Viruses present in the water are completely eliminated at a concentration of 50-200 ppm. For the purpose of eliminating virus particles, a limit of 50 ppm may be assumed, to be on the safe side.

It was found that a concentration of more than 100 ppm of performic acid does not provide any further destructive effects.

On the basis of the above, the method according to the invention preferably employs an amount of performic acid of 1-100 ppm in the water. The treatment time is preferably between 0.5 and 60 minutes. Longer treatment times are possible but not necessary.

It has been found that performic acid concentrations employed according to the invention do not ultimately have an adverse affect on the plants which are treated with water containing the performic acid. Of course the sensitivity to performic acid differs for various plants.

As has already been reported, the performic acid is used in combination with hydrogen peroxide. In so doing, the amounts of hydrogen peroxide are smaller than the amounts used according to the prior art. In general, an amount of 25-2500 ppm of hydrogen peroxide, preferably 100-1500 ppm, may be used.

The excellent effect of performic acid in combination with hydrogen peroxide, in the method according to the invention is surprising. In addition there was the problem that performic acid is an unstable compound which may even be explosive.

According to the present invention, the performic acid employed as a disinfectant is prepared in situ, i.e. from formic acid and hydrogen peroxide. The preparation of performic acid requires equivalent amounts of formic acid and hydrogen peroxide, but preferably hydrogen peroxide is present in excess. In particular, the molar ratio of formic acid and hydrogen peroxide may be from 1:10 to 10:1, for example 1:1 to 1:5. A typical mixture of performic acid and the starting materials, which mixture may be used as a disinfectant according to the invention, contains approximately 30-40 mol% of formic acid, approximately 40-60 mol% of hydrogen peroxide and approximately 10-20 mol% of performic acid.

For the purpose of in situ preparation of the performic acid, technical-grade formic acid of high concentration, for example 98%, is preferentially employed. Hydrogen peroxide is employed in a concentration of 20-50% by weight, preferably 35% by weight. Higher concentrations pose the risk of an explosion.

As soon as the mixture, applicable according to the invention, of formic acid, hydrogen peroxide and performic acid comes into contact with the water to be treated, the equilibrium in the reaction mixture is shifted in the direction of the starting compounds, that is to say that performic acid is slowly converted back into formic acid and water. In general, the concentration of performic acid in the case of strong dilution in water decreases to such an extent after a period of 12-36 hours, that no effect or no optimal effect is achieved.

Surprisingly it has been found that formic acid, which is formed from performic acid and which is in the solution in equilibrium with performic acid, is not increasing in concentration during the method of the invention, e.g. during the recycling process. The level of formic acid remains more or less constant or goes down. This means that plants are able to utilize formic acid from the disinfectant nutrient solution. This surprising phenomenon cannot be derived from the prior art. In other words, nothing is known about plants consuming or taking up formic acid through their roots.

The invention also relates to an appliance suitable for implementing the method described above comprising a reservoir for hydrogen peroxide and a reservoir for formic acid, which reservoirs are each connected to a separate line, provided with feed means, for feeding hydrogen peroxide and formic acid, respectively, to a mixing vessel, which is connected, via a discharge line provided with metering means, to a product reservoir for the finished product, which product reservoir comprises sensor means for monitoring the product quantity in the product reservoir, and dispensing means for the product, control means being provided which are connected, firstly, to the sensor means and, secondly, to the metering means for opening, on the basis of a demand for the product signalled by the sensor means, the metering means after a predetermined residence time of the mixture of hydrogen peroxide and formic acid in the vessel has elapsed.

In particular, the invention relates to an appliance, wherein the control means contain a memory which contains information regarding the minimum required residence time of the mixture in the vessel, a clock for determining the actual residence time of the mixture, and a comparator for comparing the minimum required residence time, stored in the memory, with the actual residence time indicated by the clock, and for emitting a signal to the valve when the actual residence time has become equal to the minimum required residence time.

According to a further preferred embodiment, the invention relates to an appliance wherein the control means are also connected to the feed means for switching on the feed means on the basis of a demand for product signalled by the sensor means, the control means comprising a further memory in which information is stored concerning the degree of fullness of the mixing vessel, in such a way that the control means switch on the feed means only if the mixing vessel is at least partially empty.

It is further preferable for the dispensing means, in the appliance according to the invention, to be connected to a decontaminating vessel, opening into which there is also a feed line for contaminated liquid.

The invention is explained in more detail with reference to a figure.

The appliance depicted in this figure comprises reservoirs (1) and (2) for hydrogen peroxide and for formic acid. Via lines (3) and (6) said substances can be fed to the mixing vessel (5) in which they reside for a predetermined time in order to form the desired product, viz. perfomic acid. This product can then be fed, via discharge line (8), to the product reservoir (10) whence it can be consumed as required.

In the process, the performic acid is fed, via the line (12), to the decontaminating vessel (14) which is also fed via line (15) with waste water to be cleaned. The decontaminated liquid can then be discharged via line (16).

In order to ensure correct operation of the appliance, control means (17) are further provided. These are connected to a sensor (11) present in the product reservoir (10). As soon as the sensor (11) observes that the amount of product drops below a defined amount, it emits a signal to the control means (17). Said control means (17) have a memory in which information is stored concerning the amount of mixture present in the mixing vessel. The control means (17) also comprise a clock for determining the time span during which the mixture has already been present in the mixing vessel (10).

A comparator then determines whether that time span is at least equal to a predefined reaction time span necessary to form the desired product. As soon as the residence time of the mixture in the mixing vessel (5) has become equal to that reaction time span, the control means emit a signal to the valve (9), so that the valve opens and the product can be discharged to the product reservoir (10).

As already mentioned, such a discharge of the product to the product reservoir (10) takes place only after a demand for product has been signalled by sensor (11).

The control means are further connected to the pumps (4, 7). As soon as the amount of mixture has been discharged from the mixing vessel (5), a signal is transmitted to the pumps (4, 7) for the purpose of restoring the level of the amount of mixture in the mixing vessel (5). The decision whether or not to switch on the pumps is made on the basis of information in a further memory of the control means, in which further memory the degree of fullness of the mixing vessel is stored. This information may come, for example, from a further sensor in the mixing vessel (10).

This information may also be derived from the answer to the question whether the valve (9) has opened after the pumps (4, 7) were last switched on. If the answer to this question is "yes", the vessel is emptied. The answer "no" indicates a full vessel.

The invention is explained in more detail in the following examples.

### Example I

A (1:1) molar equilibrium mixture of hydrogen peroxide and formic acid was prepared in the following manner: 100 ml of 98% by weight formic acid were placed in a 1 litre conical flask, followed by the addition of 147 ml of 50% strength hydrogen peroxide. After mixing, the mixture was stored for 30 minutes prior to being used.

An amount of 1 litre of a drain water sample from a tomato greenhouse was treated with 0.28 ml of the mixture, which corresponds to 100 ppm of hydrogen peroxide (and 20-40 ppm of performic acid).

Five other samples of 1 litre of the same drain water were treated with 100, 200, 500, 1000 and 2000 ppm respectively, of hydrogen peroxide. After treatment, the samples were examined for the total number of bacteria and the results are summarized in Table A.

**Table A**

| Amount of disinfectant | | Total number of aerobic bacteria*/ml |
|---|---|---|
| Untreated | | 31000 |
| Treated with H₂O₂ | 100 ppm | 2500 |
| | 200 ppm | 2200 |
| | 500 ppm | 1550 |
| | 1000 ppm | 1200 |
| | 2000 ppm | 500 |
| H₂O₂/performic acid mixture 100 ppm (as H₂O₂) | | 33 |

| | | |
|---|---|---|
| * Average of three samples | | |

### Example II

A mixture of one part of drain water and one part of rainwater originating from a gerbera greenhouse was treated with an equilibrium mixture which had been prepared in the same way as in Example I. An amount of 19.6 ml of this mixture was added to 70 litres of the water mixture to be treated, followed by thorough mixing. After one hour, a sample of the water was examined for bacteria, and the water was used as drinking water for gerberas in the hothouse. This treatment was repeated daily for 12 days. The results of the bacterial analysis are shown in Table B.

**Table B**

| | | Bacterial analysis* | | | |
|---|---|---|---|---|---|
| | | Aerobic germ count/ml | Enterobacteriacea/ml | Fungus/ml | Pseudomonas/ml |
| Day | Sample | | | | |
| 1 | Untreated drain water | 4500 | 35 | 17 | 1000 |
| | Untreated rainwater | 50 | 0 | 1 | 5 |
| | Treated water mixture | <50 | 0 | 0 | 0 |
| 4 | Untreated water mixture | 1300 | 11 | 10 | 600 |
| | Treated water mixture | <50 | 0 | 1 | 0 |
| 5 | Untreated water mixture | 1600 | 8 | 4 | 650 |
| | Treated water mixture | <50 | 0 | 0 | 0 |
| 6 | Untreated water mixture | 650 | 3 | 0 | 90 |
| | Treated water mixture | <50 | 0 | 0 | 0 |
| 7 | Untreated water mixture | 850 | 9 | 5 | 500 |
| | Treated water mixture | 300 | 0 | 25 | 0 |
| 8 | Untreated water mixture | 600 | 28 | 5 | 240 |
| | Treated water mixture | 50 | 0 | 0 | 0 |
| 9 | Untreated water mixture | 1300 | 21 | 6 | 16 |
| | Treated water mixture | 50 | 0 | 0 | 0 |
| 11 | Untreated water mixture | 3500 | 260 | 13 | 150 |
| | Treated water mixture | 50 | 0 | 0 | 0 |
| 12 | Untreated water mixture | 16000 | 16 | 10 | 950 |
| | Treated water mixture | 50 | 0 | 2 | 0 |

| | | | | | |
|---|---|---|---|---|---|
| * Average of three samples | | | | | |

### Example III

A (1:2) molar equilibrium mixture of H₂O₂ and formic acid was prepared by mixing 50 ml of 98% by weight formic acid and 147 ml of 50% by weight H₂O₂. The solution obtained was stored for 2 hours before it was used.

4 samples of drain water, which contained 100,000 spores of fusarium oxispores per ml, were treated with 0, 10, 100 and 200 ppm (expressed as the amount of H₂O₂) of the equilibrium mixture. The roots of 50 small tomato seedlings were immersed for 5 minutes in the treated drain water samples and were bedded out. After four weeks, the seedlings were examined for signs of fusarium infection. The results are shown in Table C.

**Table C**

| Addition of the equilibrium mixture, expressed as ppm H₂O₂ | Number of infected bedded-out seedlings/total |
|---|---|
| 0 | 50/50 |
| 10 | 46/50 |
| 100 | 0/50 |
| 200 | 0/50 |

### Example IV

An equilibrium mixture was prepared as in Example III. Five samples were infected with 100 ml of a tomato mosaic virus suspension per 100 litres of drain water. This amount was treated with, successively, 0, 100, 200, 300 and 400 ppm (expressed as H₂O₂) of the equilibrium mixture. The treated water was used according to the so-called bioassay method, which involves treatment by rubbing into the leaves of tobacco plants, using three plants per treatment. The number of infections on the leaves was counted after three days. The results are shown in Table D.

**Table D**

| Concentration of the equilibrium mixture in drain water, expressed as ppm H₂O₂ | Number of virus infections |
|---|---|
| 0 | 4500 |
| 100 | 3200 |
| 200 | 366 |
| 300 | 31 |
| 400 | 1 |

### Example V

An equilibrium mixture was prepared as in Example III. Three samples of drain water, infected with spores of Pythium aphanidermatum, were treated with, successively, 0, 50 and 100 ppm (expressed as H₂O₂) of the equilibrium mixture. After a treatment time of 5 minutes, the treated samples did not show any growth of Pythium on agar plates.

### Example VI

An equilibrium mixture was prepared as in Example III. This mixture was added to the water circulation of chicory forcing mixtures in amounts of 100-200 ppm, as shown in Table E.

**Table E**

| Day | Cumulative amount of added formic acid in ppm | (per)formic acid found in ppm |
|---|---|---|
| 0 | 0 | 0 |
| 4 | 500 | 50 |
| 10 | 2000 | < 25 |

This example illustrates that the plants are able to take up formic acid through their roots.
In other cultures similar results were obtained.

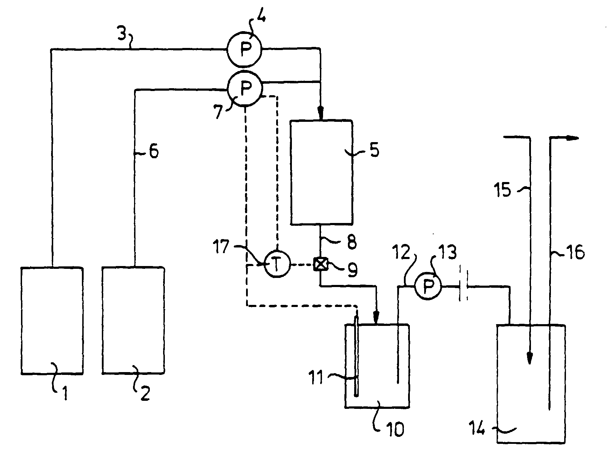

## Claims

1. Method for preventing and combatting harmful microorganisms such as fungi, viruses, bacteria, yeasts and algae in water circulation systems, wherein the water, including feed solutions and drain water, has a disinfectant added to it which at least comprises a combination of performic acid and hydrogen peroxide and possibly formic acid, and wherein the performic acid is prepared in situ from formic acid and hydrogen peroxide.

2. Method according to Claim 1, wherein performic acid is added in an amount of 1-1000 ppm.

3. Method according to Claim 1 or 2, wherein hydrogen peroxide is added in an amount of 25-2500 ppm.

4. Method according to any one of Claims 1 to 3, wherein formic acid and hydrogen peroxide are employed in a molar ratio of from 1:10 to 10:1, preferably from 1:1 to 1:5.

5. Appliance for implementing the method according to any one of the preceding claims, comprising a reservoir (1) for hydrogen peroxide and a reservoir (2) for formic acid, which reservoirs (1, 2) are each connected to a separate line (3 and 6, respectively), provided with feed means (4 and 7, respectively), for feeding hydrogen peroxide and formic acid, respectively, to a mixing vessel (5), which is connected, via a discharge line (8) provided with metering means (9), to a product reservoir (10) for the finished product, which product reservoir comprises sensor means (11) for monitoring the product quantity in the product reservoir (10), and dispensing means (12, 13) for the product, control means (17) being provided which are connected, firstly, to the sensor means (11) and, secondly, to the metering means (9) for opening, on the basis of a demand for the product signalled by the sensor means (11), the metering means (9) after a predetermined residence time of the mixture of hydrogen peroxide and formic acid in the vessel has elapsed.

6. Appliance according to Claim 5, wherein the control means (17) contain a memory which contains information regarding the minimum required residence time of the mixture in the vessel, a clock for determining the actual residence time of the mixture, and a comparator for comparing the minimum required residence time, stored in the memory, with the actual residence time indicated by the clock, and for emitting a signal to the valve (9) when the actual residence time has become equal to the minimum required residence time.

7. Appliance according to Claim 5 or 6, wherein the control means (17) are also connected to the feed means (4, 7) for switching on the feed means (4 and 7, respectively) on the basis of a demand for product signalled by the sensor means (11), the control means comprising a further memory in which information is stored concerning the degree of fullness of the mixing vessel, in such a way that the control means switch on the feed means only if the mixing vessel is at least partially empty.

8. Appliance according to Claim 7, wherein the dispensing means (12, 13) are connected to a decontaminating vessel (14), opening into which there is also a feed line (15) for contaminated liquid.

## Patentansprüche

1. Verfahren zum Vorbeugen gegen und zum Bekämpfen von schädlichen Mikroorganismen wie Pilze, Viren, Bakterien, Hefen und Algen in Wasserkreislaufsystemen, wobei dem Wasser, einschließlich Nährlösungen und Drainagewasser, ein Desinfektionsmittel zugefügt ist, das zumindest eine Kombination aus Perameisensäure und Wasserstoffperoxid und möglicherweise Ameisensäure umfaßt, und wobei die perameisensäure in situ aus Ameisensäure und Wasserstoffperoxid hergestellt wird.

2. Verfahren nach Anspruch 1, wobei Perameisensäure in einer Menge von 1 - 1000 ppm zugegeben wird.

3. Verfahren nach Anspruch 1 oder 2, wobei Wasserstoffperoxid in einer Menge von 25 - 2500 ppm zugegeben wird.

4. Verfahren nach einem der Ansprüche 1 bis 3, wobei Ameisensäure und Wasserstoffperoxid in einem Molverhältnis von von 1:10 bis 10:1, vorzugsweise von 1:1 bis 1:5 verwendet werden.

5. Vorrichtung zum Durchführen des Verfahrens nach einem der vorhergehenden Ansprüche, umfassend ein Reservoir (1) für Wasserstoffperoxid und ein Reservoir (2) für Ameisensäure, wobei die Reservoire (1, 2) jeweils verbunden sind mit einer separaten Leitung (respektive 3 und 6), die mit Zuführvorrichtungen (respektive 4 und 7) versehen sind, um Wasserstoffperoxid und respektive Ameisensäure einem Mischgefäß (5) zuzuführen, das mittels einer Abflußleitung (8), die mit einer Dosiervorrichtung (9) versehen ist, mit einem Produktreservoir (10) für das Endprodukt verbunden ist, wobei das Produktreservoir eine Sensorvorrichtung (11) zum Überwachen der Produktmenge in dem Produktreservoir (10) und eine Abgabevorrichtung (12, 13) für das Produkt aufweist, und eine Kontrollvorrichtung (17) vorgesehen ist, die erstens mit der Sensorvorrichtung (11) und zweitens mit der Dosiervorrichtung (9) verbunden ist, um aufgrund eines Bedarfs für das Produkt, der von der Sensorvorrichtung (11) signalisiert wird, die Dosiervorrichtung (9) zu öffnen, nachdem eine bestimmte Verweilzeit des Gemisches aus Wasserstoffperoxid und Ameisensäure in dem Gefäß abgelaufen ist.

6. Vorrichtung nach Anspruch 5, wobei die Kontrollvorrichtung (17) einen Speicher enthält, der Informationen hinsichtlich der mindestens erforderlichen Verweilzeit des Gemischs in dem Gefäß, eine Uhr zum Bestimmen der tatsächlichen Verweilzeit des Gemisches und eine Vergleichsvorrichtung enthält, um die mindestens erforderliche Verweilzeit, die in dem Speicher gespeichert ist, zu vergleichen, wobei die tatsächliche Verweilzeit von der Uhr angezeigt wird, und um ein Signal an ein Ventil (9) auszusenden, wenn die tatsächliche Verweilzeit gleich der mindestens erforderlichen Verweilzeit ist.

7. Vorrichtung nach Anspruch 5 oder 6. wobei die Kontrollvorrichtung (17) ebenfalls mit den Zuführvorrichtungen (4, 7) verbunden ist, um die Zuführvorrichtungen (respektive 4 und 7) aufgrund eines Bedarfs für das Produkt, der durch die Sensorvorrichtung (11) signalisiert wird, einzuschalten, wobei die Kontrollvorrichtung einen weiteren Speicher umfaßt, in dem Informationen hinsichtlich des Füllgrades des Mischgefäßes gespeichert sind, derart, daß die Kontrollvorrichtung die Zuführvorrichtung nur dann einschaltet, wenn das Mischgefäß zumindest teilweise leer ist.

8. Vorrichtung nach Anspruch 7, wobei die Abgabevorrichtungen (12, 13) mit einem Reinigungsgefäß (14) verbunden sind, in das auch eine Zuführleitung (15) für verunreinigte Flüssigkeit mündet.

## Revendications

1. Méthode pour la prévention et le combat contre les micro-organismes nuisibles tels que les champignons, les virus, les bactéries, les levures et les algues dans les systèmes à circulation d'eau, dans laquelle l'eau, y compris les solutions d'alimentation, reçoit une addition d'un désinfectant qui comprend au moins une combinaison d'acide performique et d'eau oxygénée et, éventuellement d'acide formique, et dans laquelle l'acide performique est préparé in situ à partir d'acide formique et d'eau oxygénée.

2. Méthode selon la revendication 1, dans laquelle l'acide performique est ajouté à raison de 1 - 1000 ppm.

3. Méthode selon la revendication 1 ou 2, dans laquelle l'eau oxygénée est ajoutée à raison de 25 - 2500 ppm.

4. Méthode selon l'une quelconque des revendications 1 à 3, dans laquelle l'acide formique et l'eau oxygénée sont employés dans un rapport molaire de 1 : 10 à 10 : 1, de préférence de 1 : 1 à 1 : 5.

5. Installation pour la mise en oeuvre de la méthode selon l'une quelconque des revendications précédentes, comprenant un réservoir (1) pour l'eau oxygénée et un réservoir (2) pour l'acide formique, lesquels réservoirs (1, 2) sont chacun connectés à une conduite séparée (3 et 6, respectivement) équipées de moyens d'alimentation (4 et 7, respectivement) pour amener l'eau oxygénée et l'acide formique, respectivement, à un récipient de mélangeage (5) qui est connecté par une conduite d'évacuation (8) équipée de moyens de mesure (9) à un réservoir de produit (10) pour le produit fini, lequel réservoir de produit comporte des moyens de détection (11) pour surveiller la quantité de produit dans le réservoir de produit (10) et des moyens de distribution du produit (12, 13), des moyens de contrôle (17) étant prévus et connectés, d'une part aux moyens de détection (11), et d'autre part aux moyens de mesure (9), en vue d'ouvrir, en fonction d'une demande de produit signalée par les moyens de détection (11), les moyens de mesure (9) après qu'une durée de séjour prédéterminée du mélange d'eau oxygénée et d'acide formique dans le récipient se soit écoulée.

6. Installation selon la revendication 5, dans laquelle les moyens de contrôle (17) contiennent une mémoire qui contient l'information relative à la durée de séjour minimum nécessaire du mélange dans le récipient, une horloge pour déterminer la durée de séjour réelle du mélange, et un comparateur pour comparer la durée de séjour minimum nécessaire stockée dans la mémoire avec la durée de séjour réelle indiquée par l'horloge et pour émettre un signal à la soupape (9) quand le temps de séjour réel est devenu égal à la durée de séjour minimum nécessaire.

7. Installation selon la revendication 5 ou 6, dans laquelle les moyens de contrôle (17) sont également connectés aux moyens d'alimentation (4, 7) en vue de déclencher les moyens d'alimentation (4 et 7 respectivement), en fonction d'une demande de produit signalée par les moyens de détection (11), les moyens de contrôle comprenant une autre mémoire dans laquelle est stockée l'information concernant le degré de remplissage du récipient de mélangeage, d'une manière telle que les moyens de contrôle ne déclenchent les moyens d'alimentation que si le récipient de mélangeage est au moins partiellement vide.

8. Installation selon la revendication 7, dans laquelle les moyens de distribution (12, 13) sont connectés à un récipient de décontamination (14) dans lequel débouche également une conduite d'alimentation (15) en liquide contaminé.
